# EUROPÄISCHE PATENTSCHRIFT

(11) **EP 0 511 567 B1**
(45) Veröffentlichungstag und Bekanntmachung des Hinweises auf die Patenterteilung: **20.09.1995**
(21) Anmeldenummer: 92106764.1
(22) Anmeldetag: 21.04.1992
(51) Int. Cl.: C08G 77/62, C04B 35/58, C08K 5/19

(54) **Organische Silazanpolymere, Verfahren zu ihrer Herstellung, sowie ein Verfahren zur Herstellung von Keramikmaterialien daraus**
Polyorganosilazanes, process for their preparation and a process for making ceramic material
Polyorganosilazanes, procédé pour leur préparation et procédé de fabrication de matières céramiques

(30) Priorität: 01.05.1991 DE 4114218
(43) Veröffentlichungstag der Anmeldung: 04.11.1992
(73) Patentinhaber: BAYER AG, 51368 Leverkusen (DE)
(72) Erfinder: Huggins, John, Dr., W-5090 Leverkusen 1 (DE)

(56) Entgegenhaltungen:
- EP-A- 0 202 176
- EP-A- 0 364 339
- EP-A- 0 368 536
- DE-A- 3 639 511
- FR-A- 2 599 745

## Beschreibung

Diese Erfindung betrifft neue organische Silazanpolymere, ein Verfahren zu ihrer Herstellung sowie ein Verfahren zur Herstellung von Keramikmaterialien aus diesen Silazanpolymeren.

In jüngster Zeit besteht ein großes Interesse an Verfahren zur Herstellung von Siliziumnitrid/Siliziumcarbid-haltigen keramischen Materialien. Siliziumnitrid und Siliziumcarbid verfügen über eine Reihe wünschenswerter Eigenschaften, wie chemische Inertheit, extreme Härte und Stabilität bei sehr hohen Temperaturen.

Die Pyrolyse von organischen Silazanpolymeren zu Siliziumnitrid/Siliziumcarbid-haltigen keramischen Materialien wurde bereits in der Literatur (K.J. Wynne und R.W. Rice Ann. Rev. Mater. Sci. Vol. 14 (1984) 297-334; D. Seyferth in "Transformation of Organometallics into Common and Exotic Materials: Design and Activation" R.M. Laine, Ed., Martinus Nijhoff Publ., 1988, S. 133-154) mehrfach beschrieben.

Polymervorstufen für Siliziumnitrid/Siliziumcarbidhaltige keramische Materialien finden, u.a., Anwendungen in der Herstellung von Keramikbeschichtungen und -fasern sowie als Binder oder Matrixmaterialien für die Herstellung von Formteilen aus Keramik- bzw. Metallpulver oder Keramikfasern.

Zur Herstellung von Organosilazanen werden in der Regel Organochlorsilane als Ausgangsmaterialien eingesetzt und mit Ammoniak, primären oder sekundären Aminen umgesetzt. Diese Ammonolyseprodukte sind als Vorstufen zu Keramikmaterialien nur bedingt geeignet, da sie nur geringe Keramikausbeuten bei der Pyrolyse im Bereich von 800° bis 2000°C aufweisen. Daher ist eine Reihe von Vorschlägen für Verfahren zur Herstellung von organischen Silazanpolymeren gemacht worden, die durch höhere Keramikausbeuten bei der Pyrolyse gekennzeichnet sind, wie insbesondere anhand der nachfolgend beschriebenen Literaturstellen ersichtlich wird.

Aus der DE-A 2 218 960 ist ein Verfahren zur Herstellung von SiC/Si₃N₄-Keramikmaterialien bekannt, welches darin besteht, Chlorsilane mit Aminen oder Ammoniak umzusetzen und anschließend auf hohe Temperaturen zu erhitzen. Dabei bilden sich Carbosilazan-Harze. Anschließend werden die Carbosilazan-Harze gesponnen, unschmelzbar gemacht und dann bei Temperaturen von 800° bis 2000°C gesintert. Für die Bildung des Carbosilazan-Harzes sind allerdings hohe Temperaturen von 520° bis 650°C erforderlich, was dieses Verfahren für die technische Herstellung von Silazanpolymeren wenig attraktiv macht. Weiterhin besitzen die Carbosilazan-Harze den Nachteil, daß die Ausbeute der daraus gebildeten Keramikmaterialien lediglich ca. 55 Gew.-% beträgt. In den Ausführungsbeispielen dieser Patentliteratur werden als Chlorsilane lediglich Methyltrichlorsilan bzw. Dimethyldichlorsilan und als Amin nur Methylamin eingesetzt.

In der US-A 4 482 669 wird ein Verfahren zur Herstellung von organischen Silazanpolymeren beschrieben, worin Ammoniak mit Organochlorsilanen der allgemeinen Formel (1) 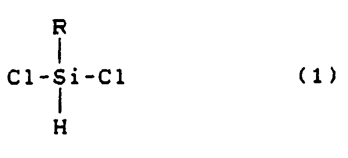
unter Bildung eines Ammonolyseprodukts umgesetzt wird. Dieses Ammonolyseprodukt wird anschließend mit basischen Katalysatoren zur Bildung von Silazanpolymeren polymerisiert. Die bei diesem Verfahren erhaltenen Silazanpolymere sind in der Regel unschmelzbare Feststoffe, die jedoch bei der Pyrolyse im Bereich von 800° bis 2000°C Keramikmaterialien in hoher Ausbeute geben.

In der US-A 4 720 532 wird ein Verfahren zur Herstellung von organischen Silazanpolymeren beschrieben, worin Ammoniak mit Organochlorsilanen der allgemeinen Formel (1) und (2) 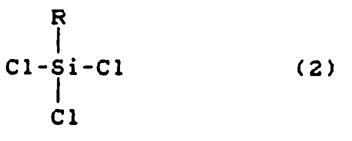
unter Bildung eines Ammonolyseprodukts umgesetzt wird.

Dieses Ammonolyseprodukt wird wie in US 4 482 669 mit basischen Katalysatoren zur Bildung von Silazanpolymeren polymerisiert. Die bei diesem Verfahren erhaltenen Silazanpolymere ergeben bei der Pyrolyse bis 1 000°C Keramikmaterialien in hoher Ausbeute. Die Silazanpolymere werden jedoch als unschmelzbare Feststoffe erhalten.

Mehrere andere Verfahren zur Herstellung von organischen Silazanpolymeren durch die basenkatalysierte Polymerisation der Ammonolyseprodukte von Organochlorsilanen sind in den Patentanmeldungen DE-A 37 19 343, DE-A 37 36 914, EP-A 0 296 433, EP-A 0 296 434 und EP-A 323 062 offenbart worden. Diese Verfahren beschreiben, wie durch geeignete Auswahl der Organochlorsilane, die bei der Ammonolyse eingesetzt werden, lösliche und schmelzbare Silazanpolymere erhalten werden können Jedoch wird in allen Fällen ein Mindestanteil an Chlorsilanen der allgemeinen Formel (1) eingesetzt. Bei allen Verfahren wird bei der Polymerisation ein Alkalimetall-haltiger Katalysator, vorzugsweise Kaliumhydrid, eingesetzt. Der Katalysator wird nach der Polymerisation mit einem halogenhaltigen Elektrophil, wie Methyliodid oder einem Organochlorsilan, neutralisiert und das anfallende Kaliumhalogenid abgetrennt.

Die oben beschriebenen Verfahren weisen jedoch mehrere Nachteile auf.

Die bevorzugten Katalysatoren Kaliumhydrid, Natriumamid sowie Kaliumtri(sec-butyl)borhydrid sind leichtentzündliche Feststoffe oder bilden leichtentzündliche bzw. selbstentzündliche Lösungen, die in Gegenwart von Luftfeuchtigkeit endzündbare Gase entwickeln. Der Umgang mit größeren Mengen dieser Substanzen ist mit einer Brand- und Explosionsgefahr verbunden. Daher müßten bei einer technischen Ausführung dieses Verfahrens teure Maßnahmen zur Vermeidung dieser Gefahren angewandt werden.

Alle bisher beschriebenen basischen Katalysatoren haben als Gegenion Alkalimetall- oder Erdalkalimetall-Kationen. Zur Entfernung der Kationen wird mit halogenhaltigen Elektrophilen neutralisiert und die anfallenden Alkalihalogenid- bzw. Erdalkalihalogenid-Salze werden durch Filtration abgetrennt. Diese Neutralisations- und Filtrations-Schritte sind nicht nur kostspielig sondern auch nur wenig wirksam. In allen Fällen bleiben Reste der Alkalihalogenid- bzw. Erdalkalihalogenid-Salze als Verunreinigung im Produkte Solche Verunreinigungen sind unerwünscht und können die Eigenschaften eines aus solchen Polymeren hergestellten Keramikmaterials negativ beeinflussen.

Einige der beschriebenen Verfahren führen zu unschmelzbaren Feststoffen, die die für viele Anwendungen geforderte Verformbarkeit nicht besitzen.

In einigen Verfahren zur Herstellung von schmelzbaren Silazanpolymeren werden erhebliche Anteile an Organochlorsilanen eingesetzt, die zu einem erhöhten Kohlenstoffgehalt im Keramikmaterial führen. Beispielsweise wurde in der DE-A 37 19 343 ein Gehalt von 19,2 bis 20,3 % C, in der DE-A 37 36 914 ein Gehalt von 17,8 bis 19,3 % C und in der EP-A 323 062 ein Gehalt von 21,1 bis 22,5 % C im pyrolysierten Keramikteil gefunden. Ein hoher Kohlenstoffgehalt in der Keramik ist unerwünscht und führt zu einer reduzierten Si₃N₄-Ausbeute sowie zu einer erhöhten Menge an SiC.

Demgemäß liegt dieser Erfindung die Aufgabe zugrunde, ein Verfahren zur Herstellung von organischen Silazanpolymeren zu finden, welches ungefährliche sowie Alkali- und Erdalkali-freie Katalysatoren verwendet und zu verbesserten vorkeramischen Materialien mit guter Löslichkeit, Schmelzbarkeit und Verarbeitbarkeit führt.

Es wurde ein Verfahren gefunden, das die Herstellung von entsprechenden Silazanpolymeren erlaubt. Gegenstand der vorliegenden Erfindung ist somit ein Verfahren zur Herstellung von schmelzbaren organischen Silazanpolymeren, dadurch gekennzeichnet, daß
a) ein oder mehrere Organochlorsilan(e) der Formel (I) 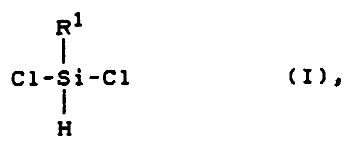 worin R¹ = Cl, H, C₁ bis C₄-Alkyl oder Phenyl ist, allein oder zusammen mit einem oder mehreren Organochlorsilan(en) der Formel (II) 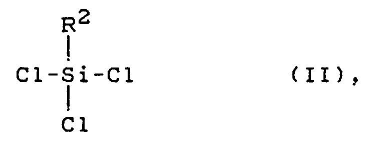 worin R² = Cl, C₁ bis C₄-Alkyl, Vinyl oder Phenyl ist, mit Ammoniak in einem inerten Lösungsmittel unter Bildung eines Ammonolyseproduktes umgesetzt werden und
b) das Ammonolyseprodukt in Gegenwart eines basischen Katalysators der Formel (III)

   R³R⁴R⁵R⁶N⁺ A⁻ (III),

   worin R³, R⁴, R⁵ und R⁶ unabhängig voneinander organische Reste mit 1 bis 24 Kohlenstoffatomen sind und A⁻ einem, eine Deprotonierung bewirkendem Alkoxy- oder Hydroxyrest entspricht, in einem inerten Lösungsmittel unter Bildung eines organischen Silazanpolymeres polymerisiert wird und
c) der Katalysator bei einer Temperatur oberhalb seiner Zersetzungstemperatur unwirksam gemacht wird.

Bevorzugt sind dabei R¹ und R² Methylreste.

Wie bereits vorher ausgeführt wurde, ist die Verwendung von Chlorsilanen als Ausgangsmaterial für die Herstellung von Silazanpolymeren sowie die basenkatalysierte Polymerisation der entsprechenden Ammonolyseprodukte bereits bekannt. Es wurde bislang jedoch weder beschrieben noch nahegelegt, daß man die basenkatalysierte Polymerisation mit Katalysatoren der allgemeinen Formel (III) unter bestimmten Reaktionsbedingungen durchführen kann und dadurch schmelzbare Silazanpolymere mit ausgezeichneten Eigenschaften auf einfache Weise erhalten kann.

Das bei dem erfindungsgemäßen Verfahren eingesetzte Organochlorsilan oder Organochlorsilangemisch besteht aus einem Silan der Formel (I) oder aus der Kombination von zwei oder mehreren Silanen der Formel (I) und (II).

Beispiele für Organochlorsilane der Formel (I), die eingesetzt werden können, sind:
Methyldichlorsilan, Phenyldichlorsilan, Dimethylchlorsilan, Phenylmethylchlorsilan, Trichlorsilan und Dichlorsilan.

Beispiele für Organochlorsilane der Formel (II), die eingesetzt werden können, sind:
Methyltrichlorsilan, Vinyltrichlorsilan, Phenyltrichlorsilan, Ethyltrichlorsilan, Propyltrichlorsilan, iso-Butyltrichlorsilan und Tetrachlorsilan.

In bevorzugter Ausführungsform des erfindungsgemäßen Verfahrens wird Methyldichlorsilan allein oder im Gemisch mit Methyltrichlorsilan oder Vinyltrichlorsilan eingesetzt. Bevorzugt sind Gemische von Methyldichlorsilan mit 0 bis 50 mol-% Methyltrichlorsilan oder 0 bis 50 mol-% Vinyltrichlorsilan. Besonders bevorzugt wird Methyldichlorsilan allein eingesetzt.

Das bei dem erfindungsgemäßen Verfahren eingesetzte Organochlorsilan oder Organochlorsilangemisch wird unter Bildung des Ammonolyseproduktes mit Ammoniak umgesetzt. Die Maßnahmen zur Bildung des Ammonolyseproduktes sind nicht kritisch und werden ausführlich in der US-A 4 482 669 (siehe Spalten 7, 8, 9) beschrieben. Beispielsweise kann man die Organochlorsilanmischung mit gasförmigem Ammoniak in einem organischen Lösungsmittel umsetzen und nach dem Abfiltrieren des als Nebenprodukt anfallenden Ammoniumchlorids das organische Lösungsmittel abdestillieren. Bevorzugt sind solche Lösungsmittel, in denen das Ammoniumchlorid geringe Löslichkeit und gute Abtrennbarkeit aufweist, z.B. Ether, aliphatische, aromatische und chlorierte Kohlenwasserstoffe. Die Ammonolyse wird mit einem Überschuß Ammoniak durchgeführt, um sicherzustellen, daß die Reaktion vollständig ist und die Endprodukte möglichst weitgehend chlorfrei sind. Vorzugsweise werden mindestens 1,5 mol Ammoniak pro mol siliziumgebundene Chloratome des Organosilangemisches eingesetzt. Im allgemeinen wird bei einer Temperatur von etwa -80 bis +120°C gearbeitet, vorzugsweise bei -40 bis +40°C.

In einem weiteren Schritt wird das Ammonolyseprodukt dann in Gegenwart eines basischen Katalysators der Formel (III) unter Bildung eines schmelzbaren organischen Silazanpolymers polymerisiert.

Der erfindungsgemäße Katalysator ist vorzugsweise ein Tetraalkylammoniumhydroxid oder Tetraalkylammoniumalkoxid. Beispiele sind Tetramethylammonium-, Tetraethylammonium-, Tetrapropylammonium-, Tetrabutylammonium-, Komplexe mit Hydroxy- und Alkoxyanionen. Ebenfalls bevorzugt sind Benzyltrimethylammonium-, Benzyltriethylammonium-, Benzyltributylammonium-, Trimethyl(2-hydroxyethyl)ammonium-, Dodecyltrimethylammonium-, Dodecyldimethyl(2-hydroxyethyl)ammonium- und Methyltrioctylammonium-Komplexe mit Hydroxy- und Alkoxy-Anionen, wie z.B. Methoxy, Ethoxy, Ebenfalls bevorzugt sind (C₄- bis C₂₄-Alkyl)trimethyl-ammoniumhydroxide oder ein (C₄- bis C₂₄-Alkyl)trimethylammoniumethoxid. Vorzugs weise werden Katalysatoren wie Tetraethylammoniummethoxid, Tetrabutylammoniummethoxid und Benzyltrimethylammoniummethoxid wegen Verfügbarkeit und guter Löslichkeit eingesetzt.

Der Katalysator kann auf verschiedene Art und Weise ins Reaktionsgemisch eingebracht werden. Er kann in Substanz oder als Lösung in protischen oder aprotischen organischen Lösungsmitteln eingesetzt werden. Bevorzugt wird die Verwendung von Lösungen in aprotischen organischen Lösungsmitteln. Viele dieser Katalysatoren sind als Lösungen in protischen Lösungsmitteln, wie z.B. Methanol verfügbar. Eine Lösung in einem aprotischen organischen Lösungsmittel, wie z.B. Pyridin, Dimethylsulfoxid, N,N-Dimethylformamid, kann auf einfache Weise nach der Methode von Y. Sprinzak (J. Am. Chem. Soc., Vol 80 (1958) 5449-5455) hergestellt werden.

Die Polymerisation wird erfindungsgemäß in einem Lösungsmittel durchgeführt. Als Lösungsmittel kann man Ether, wie z.B. Tetrahydrofuran (THF), Dialkylether, aliphatische Kohlenwasserstoffe, wie z.B. Pentan, Hexan, aromatische Kohlenwasserstoffe, wie z.B. Benzol, Toluol, Xylol sowie polare aprotische organische Lösungsmittel, wie z.B. Dimethylsulfoxid (DMSO), N,N-Dimethylformamid (DMF) einsetzen. Vorzugsweise werden Lösungsmittel verwendet, in denen sowohl das Ammonolyseprodukt als auch der Katalysator löslich sind.

Die Polymerisation wird bevorzugt in verdünnter Lösung bei niedriger Katalysatorkonzentration und Raumtemperatur durchgeführt. Lösungen mit 10 bis 500 g/l Ammonolyseprodukt können eingesetzt werden. Bevorzugt sind Lösungen mit 25 bis 150 g/l Ammonolyseprodukt. Der Katalysator kann in Mengen von 0,01 bis 3 Gew.-%, bezogen auf das Ammonolyseprodukt, eingesetzt werden. Bevorzugt werden Katalysatormengen von 0,1 bis 1,0 Gew.-% eingesetzt. Die Polymerisation wird bei einer Temperatur unterhalb der Zersetzungstemperatur des Katalysators durchgeführt. Temperaturen zwischen 20°C und 40°C werden bevorzugt.

Die Polymerisation wird dann beendet, indem man die Temperatur erhöht und den Katalysator unwirksam macht. Die erfindungsgemäßen Katalysatoren unterliegen bei höheren Temperaturen einer oder mehreren Zersetzungsreaktion(en) und werden dadurch unwirksam gemacht. Diese Zersetzungsreaktionen sind je nach Struktur des Ammoniumsalzes unterschiedlich und treten bei verschiedenen Temperaturen zum Vorschein. Die Zersetzungsprodukte sind im allgemeinen Amine und Kohlenwasserstoffe. Im bevorzugten Verfahren wird der Katalysator bei Temperaturen von 60°C bis 140°C unwirksam gemacht. Man erhält schließlich ein Silazanpolymer mit einem Schmelzpunkt im Bereich von 50°C bis 200°C.

Bei dem erfindungsgemäßen Verfahren kann man den Polymerisationsgrad und dadurch den Schmelzpunkt der Silazanpolymere in geeigneter Weise durch Wahl der Reaktionsbedingungen bei der Polymerisation steuern. Wesentliche Reaktionsbedingungen sind die Temperatur und Dauer der Polymerisation sowie die Konzentration von Ammonolyseprodukt und Katalysator. Im allgemeinen wird der Schmelzpunkt vom Polymerisationsgrad des Silazanpolymers bestimmt. Damit steigt der Schmelzpunkt des resultierenden Silazanpolymers bei höheren Polymerisationstemperaturen und mit der Dauer der Polymerisation sowie bei höheren Ammonolyseprodukt- und Katalysatoren-Konzentrationen. Die optimale Dauer der Polymerisation ergibt sich dann aus den gewählten Reaktionsbedingungen sowie dem gewünschten Schmelzpunkt des Silazanpolymers. Zum gewählten Zeitpunkt wird die Polymerisation beendet, indem man die Temperatur erhöht und den Katalysator unwirksam macht.

Die Polymerisation verläuft durch Reaktion von Si-H mit N-H Gruppen unter Bildung von neuen Si-N Bindungen und H₂. Der Fortgang der Reaktion kann anhand der Gasentwicklung erkannt und durch ¹H NMR Spektren des Silazanpolymers nachgewiesen werden. Mit fortschreitender Reaktion wird das Integralverhältnis Si-H zu SiCH₃ im ¹H NMR Spektrum kleiner.

Es wird darauf hingewiesen, daß, im Gegensatz zu den bisher bekannten Verfahren zur basenkatalysierten Polymerisation von Ammonolyseprodukten, die erfindungsgemäßen Katalysatoren nach der Polymerisation nicht neutralisiert und nicht filtriert werden müssen. Das Produkt wird nach Beendigung der Reaktion auf einfache Weise durch Abdampfen des Lösungsmittels und flüchtiger Anteile erhalten.

Das erfindungsgemäße Verfahren zur Herstellung von schmelzbaren organischen Silazanpolymeren liefert organische Silazanpolymere mit hoher Qualität. Die Silazanpolymere besitzen gute Löslichkeit, Schmelzbarkeit und Verarbeitbarkeit. Die Silazanpolymere können unschmelzbar gemacht werden. Die Silazanpolymere ergeben beim Sintern eine hohe Keramikausbeute von beispielsweise 70 bis 85 Gew.-%. Das erfindungsgemäße Verfahren setzt keine gefährlichen Substanzen ein und ist geeignet für die technische Herstellung von Silazanpolymeren.

Gegenstand dieser Erfindung ist somit auch ein organisches Silazanpolymer, welches dadurch erhältlich ist, daß
a) ein oder mehrere Organochlorsilan(e) der Formel (I) 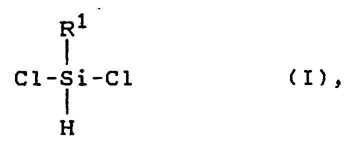 worin R¹ = Cl, H, C₁ bis C₄-Alkyl oder Phenyl ist, allein oder zusammen mit einem oder mehreren Organochlorsilan(en) der Formel (II) 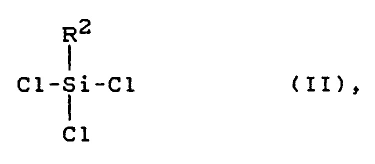 worin R² = Cl, C₁ bis C₄-Alkyl, Vinyl oder Phenyl ist, mit Ammoniak in einem inerten Lösungsmittel unter Bildung eines Ammonolyseproduktes umgesetzt werden und
b) das Ammonolyseprodukt in Gegenwart eines basischen Katalysators der Formel (III)

   R³R⁴R⁵R⁶N⁺ A⁻ (III),

   worin R³, R⁴_{,} R⁵ und R⁶ unabhängig voneinander organische Reste mit 1 bis 24 Kohlenstoffatomen sind und A⁻ einem, eine Deprotonierung bewirkenden Alkoxy- oder Hydroxyrest entspricht, in einem inerten Lösungsmittel unter Bildung eines organischen Silazanpolymeres polymerisiert wird und
c) der Katalysator bei einer Temperatur oberhalb seiner Zersetzungstemperatur unwirksam gemacht wird.

Bevorzugt weist das Silazanpolymer einen Schmelzpunkt von 50 bis 200°C auf und ist frei von Alkali- und Erdalkalimetallen.

Diese Erfindung betrifft auch ein Verfahren zur Herstellung von Keramikmaterialien. Hierzu werden die wie beschrieben erhaltenen verschiedenartigen organischen Silazanpolymere als Vorstufen für Keramikmaterialien eingesetzt. Damit ist es möglich, Keramikprodukte in hoher Reinheit in der gewünschten Form und mit ausgezeichneten physikalischen Eigenschaften in einfacher Weise herzustellen. Dieses Verfahren besteht darin, daß man das organische Silazanpolymer unter Bildung eines Keramikmaterials sintert.

Gegenstand dieser Erfindung ist somit auch ein Verfahren zur Herstellung von Keramikmaterialien, welches dadurch gekennzeichnet ist, daß
a) ein oder mehrere Organochlorsilan(e) der Formel (I) 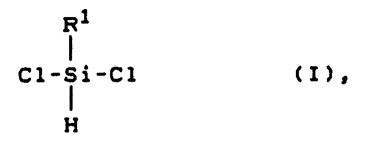 worin R¹ = Cl, H, C₁ bis C₄-Alkyl oder Phenyl ist, allein oder zusammen mit einem oder mehreren Organochlorsilan(en) der Formel (II) 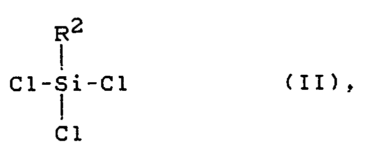 worin R² = Cl, C₁ bis C₄-Alkyl, Vinyl oder Phenyl ist, mit Ammoniak in einem inerten Lösungsmittel unter Bildung eines Ammonolyseproduktes umgesetzt werden und
b) das Ammonolyseprodukt in Gegenwart eines basischen Katalysators der Formel (III)

   R³R⁴R⁵R⁶N⁺ A⁻ (III),

   worin R³, R⁴, R⁵ und R⁶ unabhängig voneinander organische Reste mit 1 bis 24 Kohlenstoffatomen sind und A⁻ einem, eine Deprotonierung bewirkenden Alkoxy- oder Hydroxyrest entspricht, in einem inerten Lösungsmittel unter Bildung eines organischen Silazanpolymeres polymerisiert wird und
c) der Katalysator bei einer Temperatur oberhalb seiner Zersetzungstemperatur unwirksam gemacht wird und
d) das Silazanpolymer unter Bildung eines Keramikmaterials gesintert wird.

In einer bevorzugten Ausführungsform wird dazu geschmolzen, verformt und unter Bildung eines Keramikmaterials gesintert.

In einer besonders bevorzugten Ausführungsform wird das organische Silazanpolymer zur Herstellung von Beschichtungen auf eine Oberfläche aufgebracht oder zur Herstellung von Fasern gesponnen sowie zur Herstellung von Formteilen mit temperaturbeständigen Pulvern oder Fasern vermischt und dann durch Einwirkung von Wärme und/oder Druck verformt. Das Silazanpolymer kann nach dem Aufbringen, Verspinnen oder der Formgebung durch Tempern, Oxidieren, Hydrolysieren oder durch Bestrahlung unschmelzbar gemacht werden. Das Silazanpolymer wird dann unter Bildung eines Keramikmaterials bei Temperaturen im Bereich von 800°C bis 2.000°C gesintert.

Der Formgebungsprozeß kann je nach Form des gewünschten Keramikartikels unterschiedlich durchgeführt werden. Beschichtungen können aus Lösungen hergestellt werden. Fasern können versponnen werden. Zur Herstellung von Formkörpern können die Polymere mit Keramik- oder Metallpulver oder Keramikfasern gemischt und dann unter Anwendung von Druck bzw. Wärme durch Spritzgießen, Pressen oder Heißpressen verformt werden.

Anschließend können die Formteile durch Erhitzen an der Luft oder durch Bestrahlen mit einem Elektronenstrahl oder durch Bestrahlen mit ultravioletter Strahlung sowie andere Verfahren unschmelzbar gemacht werden.

Die erfindungsgemäßen organischen Silazanpolymere werden nach der Formgebung bei Temperaturen im Bereich von 800 bis 2000°C unter Bildung von Keramikmaterialien gesintert. Vorzugsweise wird das Sintern in zwei Stufen durchgeführt. Bei Temperaturen von 800° bis 1500°C wird das Silazanpolymer pyrolysiert und in eine zum großen Teil amorphe Keramik überführt. Bei Temperaturen von 1500°C bis 2000°C, je nach Zusatz von Sinterhilfsmitteln, wird das Keramikteil verdichtet. Die Keramikausbeute wird überwiegend durch den Pyrolyseprozeß bis 1500°C bestimmt.

Das Sintern wird im Vakuum oder in einer Inertgasatmosphäre, wie z.B. N₂, He, Ar, durchgeführt. In dieser Weise erhält man ein aus SiC und Si₃N₄ gebildetes Keramikmaterial. Wird das Sintern mindestens zum Teil in einer H₂- oder NH₃-Atmosphäre durchgeführt, erhält man eine fast kohlenstofffreie Keramik, die hauptsächlich aus Si₃N₄ besteht.

Die Erfindung wird durch die folgenden Beispiele weiter beschrieben. Sie dienen lediglich zur Erläuterung und sollen den Schutzumfang der Erfindung in keiner Weise beschränken.

### Beispiele

### Beispiel 1

### Ammonolyse von Methyldichlorsilan

In einem 3-l-Vierhalskolben mit Rührer, Thermometer, NH₃-Gaseinleitungsrohr und Trockeneis-Kühler wurden 288 g (2,5 mol) Methyldichlorsilan und 2 l getrocknetes Toluol vorgelegt. Die Temperatur wurde auf -15°C bis -20°C durch Außenkühlung gesenkt und 190 g (11,2 mol, 50-% Überschuß) NH₃ während 4 Stunden eingeleitet. Dabei erhöhte sich die Innentemperatur zeitweise auf 10 bis 15°C, sank aber mit Sättigung der Lösung auf unter -20°C. Die Kühlung wurde entfernt und die Lösung langsam auf Raumtemperatur erwärmt, um das überschüssige NH₃ abdampfen zu lassen. Das ausgefallene Ammoniumchlorid wurde durch Filtration abgetrennt und der Filterkuchen dreimal mit 100 ml Toluol gewaschen. Das Toluol wurde bei reduziertem Druck bis 30°C und 1 mbar abgedampft.

Das Ammonolyseprodukt (1) wurde als leicht trübe, farblose Flüssigkeit mit einer Viskosität von 50 mPa-s (25°C) in einer Menge von 134 g erhalten.
¹H-NMR (300 MHz, CDCl₃, ppm): δ 0,0-0,3 (br, SiCH₃, Int. 126), 0,5-1,1 (br, NH, Int. 33), 4,3-5,0 (mult, SiH, Int. 38). Anal.: Si, 50,5 %.

Bei der Pyrolyse dieses Produktes in einer Stickstoff-Atmosphäre bis 1.400°C bei einer Aufheizgeschwindigkeit von 5°C/min wurde ein keramisches Material mit einer Ausbeute von 48 % erhalten.

### Beispiel 2

### Ammonolyse von Methyldichlorsilan und Methyltrichlorsilan im Verhältnis 50 : 50 (mol-%)

In einem 4-l-Vierhalskolben mit Rührer, Thermometer, NH₃-Gaseinleitungsrohr und Trockeneis-Kühler wurden 150 g (1,3 mol) Methyldichlorsilan, 194 g (1,3 mol) Methyltrichlorsilan und 2,5 l getrocknetes Toluol vorgelegt. Die Temperatur wurde auf -15°C bis -20°C durch Außenkühlung gesenkt und 285 g (16,8 mol, 70 % Überschuß) NH₃ wurde während 7 Stunden eingeleitet. Dabei erhöhte sich die Innentemperatur zeitweise auf 10 bis 15°C, sank aber nach Sättigung der Lösung auf unter -20°C. Die Kühlung wurde entfernt und die Lösung langsam auf Raumtemperatur erwärmt, um das überschüssige NH₃ abdampfen zu lassen. Das ausgefallene Ammoniumchlorid wurde durch Filtration abgetrennt und der Filterkuchen dreimal mit 100 ml Toluol gewaschen. Das Toluol wurde bei reduziertem Druck bis 60°C und 1 mbar abgedampft.

Das Ammonolyseprodukt (2) wurde als trübe, farblose Flüssigkeit in einer Menge von 137 g erhalten.
¹H-NMR (300 MHz, CDCl₃, ppm): 0,0-0,3 (br. SiCH₃, Int. 112)0,5-1,3 (br, NH, Int. 38) 4,2-5,0 (mult, SiH, Int. 18).

### Beispiel 3

### Polymerisation von (1) mit 0,25 Gew.-% Benzyltrimethyl ammoniummethoxid

In einem 500-ml-Zweihalskolben mit Magnetrührer und Kühler wurden 10 g des Ammonolyseproduktes (1) aus Beispiel 1 und 150 g getrocknetes THF vorgelegt und mit N₂ überlagert. Eine Mischung von 0,2 g (0,25 Gew.-%) einer 12,2 %igen Lösung von Benzyltrimethylammoniummethoxid in Dimethylsulfoxid und 5 g THF wurde hergestellt und innerhalt 5 min zugegeben. Eine leichte Gasentwicklung wurde beobachtet. Die Lösung wurde 30 min bei 25°C gerührt und 3 h am Rückfluß gekocht. Das Produkt wurde bei 40°C und 1 mbar von THF und flüchtigen Anteilen befreit.

Das Silazanpolymer wurde als rosafarbiger, spröder Feststoff mit einem Schmelzpunkt von 75°C in einer Menge von 5,8 g erhalten.
¹H-NMR (300 MHz, Aceton-d₆, ppm): δ 0,00-0,5 (br, SiCH₃, Int. 147,1), 1,0-2,4 (br, NH, Int. 23,3), 3,4-3,5 (br, SiOCH₃, Int. 1), 4,4-5,1 (br, SiH, Int. 31,6). IR (KBr, cm⁻¹): 3 400 (br, m), 2 960 (sh, m), 2 900 (sh, w), 2 120 (sh, s), 1 400 (br, w), 1 260 (sh, s), 1 175 (br, s), 850-1 020 (br, vs), 760 (br, s). Anal.: C, 22,9 %; N, 25,1 %; 0, 4,6 %; Si, 44,0 %.

Bei der Pyrolyse dieses Produktes in einer Stickstoff-Atmosphäre bis 1 400°C bei einer Aufheizgeschwindigkeit von 5°C/min wurde ein Siliziumnitrid enthaltendes keramisches Material mit einer Ausbeute von 78 % erhalten, das einen Kohlenstoffgehalt von 9,1 Gew.-% aufwies.

### Beispiel 4

### Polymerisation von (1) mit 0,25 Gew.-% Tetrabutylammoniumhydroxid

In einem 250-ml-Einhalskolben mit Magnetrührer und Kühler wurde 0,1 g (0,25 Gew.-%) einer 25 %igen Lösung von Tetrabutylammoniumhydroxid in Methanol vorgelegt und im Wasserstrahlvakuum bei 25°C das überschüssige Methanol abgedampft. Das Ammoniumsalz wurde in 100 g THF gelöst und mit N₂ überlagert. Eine Lösung von 10 g des Ammonolyseproduktes (1) in 50 g THF wird zugegeben. Eine leichte Gasentwicklung wurde beobachtet. Die Lösung wurde 1 h bei 25°C gerührt und 3 h am Rückfluß gekocht. Das THF wurde bei 25°C und 30 mbar abdestilliert und das Produkt bis 60°C und 1 mbar von flüchtigen Anteilen befreit.

Das Silazanpolymer wurde als weißer, spröder Feststoff mit einem Schmelzpunkt von 105°C in einer Menge von 6,8 g erhalten.
¹H-NMR (300 MHz, CDCl₃, ppm): δ 0,00-0,5 (br, SiCH₃, Int. 125), 0,6-1,3 (br, NH, Int. 31), 3,4-3,5 (br, SiOCH₃, Int. 1), 4,5-5,0 (br, SiH, Int. 18,5). IR (KBr, cm⁻¹); 3 400 (br, s), 2 980 (sh, m), 2 900 (sh, w), 2 120 (sh, m), 1 630 (br, m), 1 400 (br, w), 1 260 (sh, s), 1 170 (br. s), 850-1 020 (br, vs), 760 (br, s). Anal.: Si, 43,6 %. Das Silazanpolymer enthält < 10 ppm Kalium.

### Beispiele 5 bis 11

### Polymerisation von (1) mit Benzyltrimethylammoniummethoxid

Die Polymerisation von jeweils 10 g des Ammonolyseproduktes aus (1) in getrocknetem THF wurde wie in Beispiel 3 durchgeführt. Als Katalysator wurde PhCH₂NMe₃ + MeO⁻ als 12 %ige Lösung im Dimethylsulfoxid eingesetzt. Die unterschiedlichen Reaktionsbedingungen sowie die Ergebnisse sind in Tabelle 1 zusammengeführt.

**Tabelle 1**

| Nr. | Konz. g/l ^{a)} | Kat. Gew. -% ^{b)} | Temp. °C | Zeit Min ^{c)} | Ausbeute | Fp. °C % |
|---|---|---|---|---|---|---|
| 5 | 55 | 0,25 | 25 | 30 | 61 | 70 |
| 6 | 55 | 0,25 | 25 | 60 | 80 | 89 |
| 7 | 55 | 0,25 | 25 | 180 | 95 | 96 |
| 8 | 55 | 0,25 | 40 | 60 | 78 | 135 |
| 9 | 130 | 0,25 | 25 | 30 | 72 | 120 |
| 10 | 55 | 0,5 | 25 | 30 | 80 | 130 |
| 11 | 180 | 1,0 | 25 | 60 | 88 | - ^{d)} |

| | | | | | | |
|---|---|---|---|---|---|---|
| ^{a)} Konzentration des Ammonolyseproduktes in THF, | | | | | | |
| ^{b)} bezogen auf g Ammonolyseprodukt, | | | | | | |
| ^{c)} anschließend wurde 3 h am Rückfluß gekocht, | | | | | | |
| ^{d)} kein Schmelzpunkt | | | | | | |

### Beispiel 12

### Polymerisation von (2) mit 0,25 Gew.-% Benzyltrimethylammoniummethoxid

In einem 250-ml-Zweihalskolben mit Magnetrührer und Kühler wurden 10 g des Ammonolyseproduktes (2) und 140 g getrocknetes THF vorgelegt und mit N₂ überlagert. Eine Mischung von 0,2 g (0,25 Gew.-%) einer 12,2 %igen Lösung von Benzyltrimethylammoniummethoxid in Dimethylsulfoxid und 10 g THF wurde hergestellt und innerhalb 10 min zugegeben. Eine heftige Gasentwicklung wurde beobachtet. Die Lösung wurde 30 min bei 25°C gerührt und dann 3 h am Rückfluß gekocht. Das Produkt wurde bei 40°C und 1 mbar von THF und flüchtigen Anteilen befreit. Das Silazanpolymer wurde als löslicher, rosafarbiger Feststoff mit einem Erweichungspunkt von 60°C in einer Menge von 6,4 g erhalten.
IR (KBr, cm⁻¹): 3 400 (br, m), 2 955 (sh, m), 2 900 (sh, w), 2 120 (sh, m), 1 410 (br, w), 1 260 (sh, s), 1 170 (br, s), 700-1 000 (br, vs).

### Beispiel 13

### Ammonolyse von Methyldichlorsilan und Polymerisation mit Tetrabutylammoniumhydroxid

In einem 4-l-Vierhalskolben mit Rührer, Thermometer, NH₃-Gaseinleitungsrohr und Trockeneis-Kühler wurden 368 g (3,2 mol) Methyldichlorsilan und 2,5 l getrocknetes THF vorgelegt. Dann wurden ohne Außenkühlung 245 g (17,5 Mol, Überschuß) NH₃ während 4 Stunden eingeleitet. Dabei erhöhte sich die Innentemperatur zeitweise auf 30°C, sank aber auf unter 20°C. Der Kühler wurde entfernt, um das überschüssige NH₃ abdampfen zu lassen. Das ausgefallene Ammoniumchlorid wurde durch Filtration abgetrennt und der Filterkuchen dreimal mit 100 ml THF gewaschen.

Das Filtrat (2150 g) wurde in einem 3-l-Vierhalskolben mit Rührer, Thermometer, Tropftrichter und Wasserkühler vorgelegt. Dann wurden von 1,36 g (ca. 0,25 Gew.-%) einer 25 %igen Lösung von Tetrabutylammoniumhydroxid in Methanol das überschüssige Methanol mit einem Wasserstrahlvakuum abgedampft und der Rückstand in 45 g THF gelöst. Diese Lösung wurde über 5 Minuten zugetropft, dabei wurde eine starke Gasentwicklung beobachtet. Die Lösung wurde 3 h bei 25°C gerührt und 3 h am Rückfluß gekocht. Das Produkt wurde bis 60°C und 1 mbar von THF und flüchtigen Anteilen befreit. Das Silazanpolymer wurde als leicht rosafarbiger, spröder Feststoff mit einem Schmelzpunkt von 85°C in einer Menge von 130 g erhalten.
¹H-NMR (300 MHz,CDCl₃, ppm): δ 0,00-0,5 (br, SiCH₃, Int. 124,7), 0,6-1,3 (br, NH, Int. 27), 3,4-3,5 (br, SiOCH₃, Int. 1), 4,3-5,0 (br, SiH, Int. 18,2). Anal.: Si, 45,5 %; K, <1 ppm.

### Beispiel 14 (Vergleichsbeispiel)

### Polymerisation von (1) mit Kaliumhydrid

In einem 2-l-Dreihalskolben mit Rührer, Thermometer, Tropftrichter und Kühler wurden 5,71 g (2,7 Gew.-%) einer 35 %igen KH-Dispersion in Mineralöl vorgelegt. Die Dispersion wurde zweimal mit 50 ml getrocknetem Hexan gewaschen, um das Mineralöl zu entfernen. Anschließend wurden 800 ml getrocknetes THF dazugegeben. Unter ständigem Rühren wurde dann eine Lösung von 74 g des Ammonolyseproduktes (1) in 200 ml THF während 10 min zugetropft. Eine Gasentwicklung wurde beobachtet. Nach 2,5 h war die Gasentwicklung zu Ende. Weitere 10,6 g Methyliodid wurden hinzugegeben und über Nacht gerührt. Das THF wurde bei 25°C und 30 mbar abgedampft und der Rückstand in 300 ml Hexan gelöst. Das ausgefallene KI wurde durch Filtration abgetrennt. Das Produkt wurde bis 30°C und 1 mbar von Lösungsmitteln und flüchtigen Bestandteilen befreit. Als Produkt wurde ein weißer Feststoff ohne Schmelzpunkt in einer Menge von 74 g erhalten.
¹H-NMR (300 MHz, CDCl₃, ppm): δ 0,0-0,5 (br, SiCH₃, Int. 102), 0,5-1,8 (br, NH, Int. 44), 2,5 (br, NCH₃, Int. 3), 4,5-5,0 (br, SiH, Int. 18). IR (KBr, cm⁻¹): 3 400 (br, m), 2 960 (sh, m), 2 900 (sh, w), 2 130 (sh, m), 1 410 (br, w), 1 260 (sh, s), 1 150-1 200 (br, s), 820-1 030 (br, vs), 750 (br, m).
Analysen: C, 22,3 %; N, 21,0 %; Si, 42,7 %. Zusätzlich enthält das Produkt 90 ppm Kalium und 350 ppm Iod.

Bei der Pyrolyse dieses Silazanpolymers in einer Stickstoff-Atmosphäre bis 1 400°C bei einer Aufheizgeschwindigkeit von 5°C/min wurde keramisches Material mit einer Ausbeute von 71 % erhalten. Dieses Silazanpolymer ist trotz guter Keramikausbeute für viele Anwendungen als vorkeramisches Material wegen fehlender Schmelzbarkeit ungeeignet.

### Beispiel 15 (Vergleichsbeispiel)

Ammonolyse von Methyldichlorsilan und Dimethyldichlorsilan in einem Verhältnis von 67:33 (mol-%) und Polymerisation mit KH
a) Ammonolyse
   In einem 4-l-Vierhalskolben mit Rührer, Thermometer, NH₃-Gaseinleitungsrohr und Trockeneis-Kühler wurden 414 g (3,6 mol) Methyldichlorsilan, 150 g (1,16 mol) Dimethyldichlorsilan und 2,2 l getrocknetes THF vorgelegt. Die Temperatur wurde auf -15°C bis -20°C durch Außenkühlung gesenkt und 365 g (21,5 mol, 50 % Überschuß) NH₃ wird während 7 Stunden eingeleitet. Die Kühlung wurde entfernt und die Lösung langsam auf Raumtemperatur erwärmt, um das überschüssige NH₃ abdampfen zu lassen. Das ausgefallene Ammoniumchlorid wurde durch Filtration abgetrennt und der Filterkuchen dreimal mit 100 ml THF gewaschen.
b) Polymerisation
   In einem 3-l-Dreihalskolben mit Rührer, Thermometer, Tropftrichter und Kühler wurden 11,5 g (ca. 2 Gew.-%) einer 35 %iger KH-Dispersion in Mineralöl vorgelegt. Die Dispersion wurde dreimal mit 50 ml getrocknetem Hexan gewaschen, um das Mineralöl zu entfernen. Dann gab man die THF-Lösung des Ammonolyseproduktes aus (a) über 15 min dazu. Eine starke Gasentwicklung wurde beobachtet. Nach 5 h war die Gasentwicklung zu Ende. Weitere 15 g Methyliodid wurden hinzugegeben und über Nacht gerührt. Das THF wurde bei 25°C und 30 mbar abgedampft und der Rückstand in 1 200 ml Hexan gelöst. Das ausgefallene KI wurde durch Filtration abgetrennt. Das Produkt wurde bei 40°C und 1 mbar vom Lösungsmittel und flüchtigen Bestandteilen befreit. Als Produkt wurde ein weißer Feststoff mit einem Schmelzpunkt von 95°C in einer Menge von 198 g erhalten.
   ¹H-NMR (300 MHz, CDCl₃, ppm): δ 0,0-0,5 (br, SiCH₃, Int. 146), 0,5-1,8 (br, NH, Int. 23), 2,5 (br, NCH₃, Int. 1), 4,5-5,0 (br, SiH, Int. 14). IR (KBr, cm⁻¹): 3 400 (br, m), 2 960 (sh, m), 2 900 (sh, w), 2 120 (sh, m), 1 410 (br, w), 1 260 (sh, s), 1 160 (br, s), 870-1 020 (br, vs), 790 (br, w).
   Analysen: Si, 44,2 %. Das Produkt enthält 20 ppm Kalium und 30 ppm Iod.

Bei der Pyrolyse dieses Silazanpolymers in einer Stickstoff-Atmosphäre bis 1 400°C bei einer Aufheizgeschwindigkeit von 5°C/min wurde ein keramisches Material mit einer Ausbeute von 64 % erhalten, das einen Kohlenstoffgehalt von 14,1 Gew.-% aufwies.

## Patentansprüche

1. Verfahren zur Herstellung von schmelzbaren organischen Silazanpolymeren, dadurch gekennzeichnet, daß
a) ein oder mehrere Organochlorsilan(e) der Formel (I) 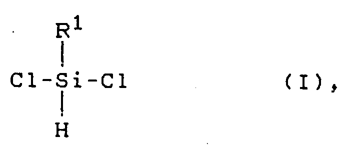 worin R¹ = Cl, H, C₁ bis C₄-Alkyl oder Phenyl ist, allein oder zusammen mit einem oder mehreren Organochlorsilan(en) der Formel (II) 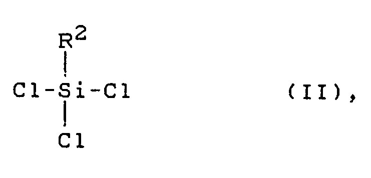 worin R² = Cl, C₁ bis C₄-Alkyl, Vinyl oder Phenyl ist, mit Ammoniak in einem inerten Lösungsmittel unter Bildung eines Ammonolyseproduktes umgesetzt werden und
b) das Ammonolyseprodukt in Gegenwart eines basischen Katalysators der Formel (III)
R³R⁴R⁵R⁶N⁺ A⁻ (III),
worin R³, R⁴, R⁵ und R⁶ unabhängig voneinander organische Reste mit 1 bis 24 Kohlenstoffatomen sind und A⁻ einem, eine Deprotonierung bewirkenden Alkoxy- oder Hydroxyrest entspricht, in einem inerten Lösungsmittel unter Bildung eines organischen Silazanpolymeres polymerisiert wird und
c) der Katalysator bei einer Temperatur oberhalb seiner Zersetzungstemperatur unwirksam gemacht wird.

2. Verfahren gemäß Anspruch 1, dadurch gekennzeichnet, daß Methyldichlorsilan mit Ammoniak umgesetzt wird.

3. Verfahren gemäß Anspruch 1, dadurch gekennzeichnet, daß ein Gemisch aus 0 bis 50 mol-% Methyltrichlorsilan und 50 bis 100 mol-% Methyldichlorsilan mit Ammoniak umgesetzt wird.

4. Verfahren gemäß einem oder mehreren der Ansprüche 1 bis 3, dadurch gekennzeichnet, daß der Katalysator ein Tetraalkylammoniumhydroxid oder Tetraalkylammoniumalkoxid ist.

5. Verfahren gemäß Anspruch 4, dadurch gekennzeichnet, daß der Katalysator Tetramethylammoniumhydroxid, Tetramethylammoniummethoxid, Tetraethylammoniumhydroxid, Tetraethylammoniummethoxid, Tetrabutylammoniumhydroxid, Tetrabutylammoniummethoxid; Benzyltrimethylammoniumhydroxid, Benzyltrimethylammoniummethoxid, ein (C₄- bis C₂₄-Alkyl)trimethylammoniumhydroxid oder ein (C₄- bis C₂₄-Alkyl)trimethylammoniummethoxid ist.

6. Verfahren gemäß einem oder mehreren der Ansprüche 4 und 5, dadurch gekennzeichnet, daß das Ammonolyseprodukt in einem inerten Lösungsmittel bei einer Konzentration von 25 bis 150 g/l mit einem basischen Katalysator der Formel (III) zuerst bei einer niedrigeren Temperatur zur Reaktion gebracht wird und dann der Katalysator durch Erwärmen auf eine Temperatur oberhalb der Zersetzungstemperatur des Katalysators unwirksam gemacht wird.

7. Organisches Silazanpolymer, dadurch erhältlich, daß
a) ein oder mehrere Organochlorsilan(e) der Formel (I) 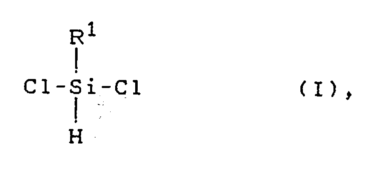 worin R¹ = Cl, H, C₁ bis C₄-Alkyl oder Phenyl ist, allein oder zusammen mit einem oder mehreren Organochlorsilan(en) der Formel (II) 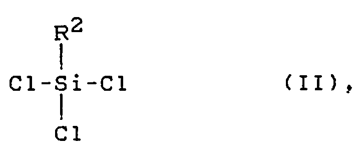 worin R² = Cl, C₁ bis C₄-Alkyl, Vinyl oder Phenyl ist, mit Ammoniak in einem inerten Lösungsmittel unter Bildung eines Ammonolyseproduktes umgesetzt werden und
b) das Ammonolyseprodukt in Gegenwart eines basischen Katalysators der Formel (III)
R³R⁴R⁵R⁶N⁺ A⁻ (III),
worin R³, R⁴, R⁵ und R⁶ unabhängig voneinander organische Reste mit 1 bis 24 Kohlenstoffatomen sind und A⁻ einem, eine Deprotonierung bewirkenden Alkoxy- oder Hydroxyrest entspricht, in einem inerten Lösungsmittel unter Bildung eines organischen Silazanpolymeres polymerisiert wird und
c) der Katalysator bei einer Temperatur oberhalb seiner Zersetzungstemperatur unwirksam gemacht wird.

8. Organisches Silazanpolymer gemäß Anspruch 7, dadurch gekennzeichnet, daß das Silazanpolymer einen Schmelzpunkt von 50 bis 200°C aufweist und frei von Alkali- und Erdalkalimetallen ist.

9. Verfahren zur Herstellung von Keramikmaterialien, dadurch gekennzeichnet, daß
a) ein oder mehrere Organochlorsilan(e) der Formel (I) 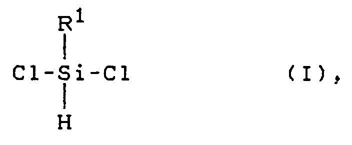 worin R¹ = Cl, H, C₁ bis C₄-Alkyl oder Phenyl ist, allein oder zusammen mit einem oder mehreren Organochlorsilan(en) der Formel (II) 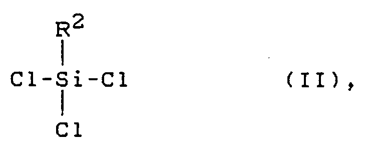 worin R² = Cl, C₁ bis C₄-Alkyl, Vinyl oder Phenyl ist, mit Ammoniak in einem inerten Lösungsmittel unter Bildung eines Ammonolyseproduktes umgesetzt werden und
b) das Ammonolyseprodukt in Gegenwart eines basischen Katalysators der Formel (III)
R³R⁴R⁵R⁶N⁺ A⁻ (III),
worin R³, R⁴, R⁵ und R⁶ unabhängig voneinander organische Reste mit 1 bis 24 Kohlenstoffatomen sind und A⁻ einem, eine Deprotonierung bewirkenden Alkoxy- oder Hydroxyrest entspricht, in einem inerten Lösungsmittel unter Bildung eines organischen Silazanpolymeres polymerisiert wird und
c) der Katalysator bei einer Temperatur oberhalb seiner Zersetzungstemperatur unwirksam gemacht wird und
d) das Silazanpolymer unter Bildung eines Keramikmaterials gesintert wird.

10. Verfahren gemäß Anspruch 9, dadurch gekennzeichnet, daß das Silazanpolymer geschmolzen, verformt und unter Bildung eines Keramikmaterials gesintert wird.

11. Verfahren gemäß Anspruch 9, dadurch gekennzeichnet, daß das Silazanpolymer zur Beschichtung eines Substrats auf eine Oberfläche gebracht und unter Bildung einer Keramikbeschichtung gesintert wird.

12. Verfahren gemäß Anspruch 9, dadurch gekennzeichnet, daß das Silazanpolymer mit Keramik- oder Metallpulver oder Keramikfasern vermischt, die Mischung durch Einwirkung von Wärme und/oder Druck in eine Form gebracht und unter Bildung eines Keramikmaterials gesintert wird.

13. Verfahren gemäß einem oder mehreren der Ansprüche 9 bis 12, dadurch gekennzeichnet, daß das Silazanpolymer nach der Formgebung durch Tempern, Oxidieren, Hydrolysieren oder durch Bestrahlung unschmelzbar gemacht und unter Bildung eines Keramikmaterials gesintert wird.

14. Verfahren gemäß einem oder mehreren der Ansprüche 9 bis 13, dadurch gekennzeichnet, daß das Sintern bei Temperaturen von 800°C bis 2 000°C durchgeführt wird.

15. Verfahren gemäß Anspruch 14, dadurch gekennzeichnet, daß das Sintern im Vakuum oder in einer Inertgasatmosphäre durchgeführt wird.

16. Verfahren gemäß Anspruch 14, dadurch gekennzeichnet, daß das Sintern mindestens zum Teil in einer H₂- oder NH₃-Atmosphäre durchgeführt und dadurch eine fast kohlenstofffreie Keramik erhalten wird.

## Claims

1. Process for the production of fusible organic silazane polymers, characterised in that
a) one or more organochlorosilane(s) of the formula (I) 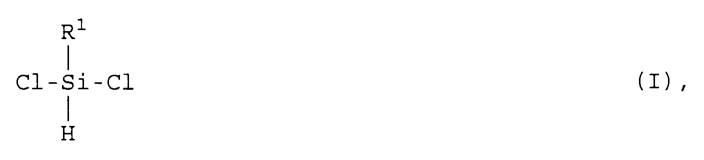 in which R¹ = Cl, H, C₁ to C₄ alkyl or phenyl, alone or together with one or more organochlorosilane(s) of the formula (II) 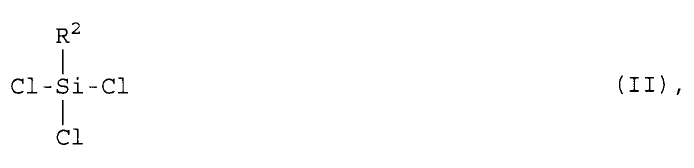 in which R² = Cl, C₁ to C₄ alkyl, vinyl or phenyl, is reacted with ammonia in an inert solvent to form an ammonolysis product and
b) the ammonolysis product is polymerised in the presence of a basic catalyst of the formula (III)
R³R⁴R⁵R⁶N⁺ A⁻ (III),
in which R³, R⁴, R⁵ and R⁶ mutually independently are organic residues having 1 to 24 carbon atoms and A⁻ denotes a deprotonating alkoxy or hydroxy residue, in an inert solvent to form an organic silazane polymer and
c) the catalyst is inactivated at a temperature above its decomposition temperature.

2. Process according to claim 1, characterised in that methyldichlorosilane is reacted with ammonia.

3. Process according to claim 1, characterised in that a mixture of 0 to 50 mol.% of methyltrichlorosilane and 50 to 100 mol.% of methyldichlorosilane is reacted with ammonia.

4. Process according to one or more of claims 1 to 3, characterised in that the catalyst is a tetraalkylammonium hydroxide or tetraalkylammonium alkoxide.

5. Process according to claim 4, characterised in that the catalyst is tetramethylammonium hydroxide, tetramethylammonium methoxide, tetraethylammonium hydroxide, tetraethylammonomium methoxide, tetrabutylammonium hydroxide, tetrabutylammonium methoxide, benzyltrimethylammonium hydroxide, benzyltrimethylammonium methoxide, a (C₄ to C₂₄ alkyl)trimethylammonium hydroxide or a (C₄ to C₂₄ alkyl)trimethylammonium methoxide.

6. Process according to one or more of claim 4 and 5, characterised in that the ammonolysis product is initially reacted in an inert solvent at a concentration of 25 to 150 g/l at a low temperature with a basic catalyst of the formula (III) and the catalyst is then inactivated by heating to above the decomposition temperature of the catalyst.

7. Organic silazane polymer, obtainable by
a) reacting one or more organochlorosilane(s) of the formula (I) 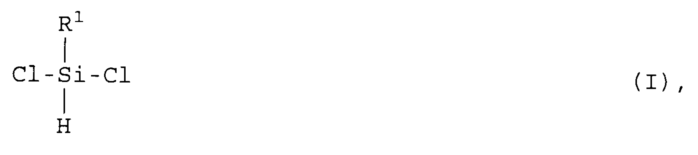 in which R¹ = Cl, H, C₁ to C₄ alkyl or phenyl, alone or together with one or more organochlorosilane(s) of the formula (II) 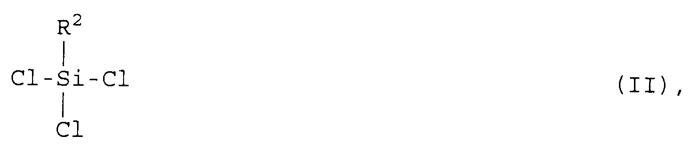 in which R² = Cl, C₁ to C₄ alkyl, vinyl or phenyl, with ammonia in an inert solvent to form an ammonolysis product and
b) polymerising the ammonolysis product in the presence of a basic catalyst of the formula (III)
R³R⁴R⁵R⁶N⁺ A⁻ (III),
in which R³, R⁴, R⁵ and R⁶ mutually independently are organic residues having 1 to 24 carbon atoms and A⁻ denotes a deprotonating alkoxy or hydroxy residue, in an inert solvent to form an organic silazane polymer and
c) inactivating the catalyst at a temperature above its decomposition temperature.

8. Organic silazane polymer according to claim 7, characterised in that the silazane polymer has a melting point of 50 to 200°C and is free of alkali metals and alkaline earth metals.

9. Process for the production of ceramic materials, characterised in that
a) one or more organochlorosilane(s) of the formula (I) 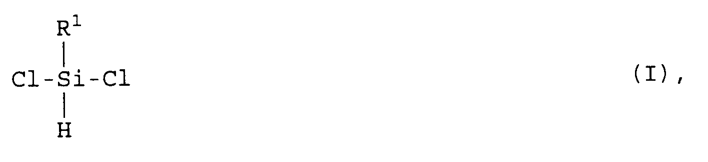 in which R¹ = Cl, H, C₁ to C₄ alkyl or phenyl, alone or together with one or more organochlorosilane(s) of the formula (II) 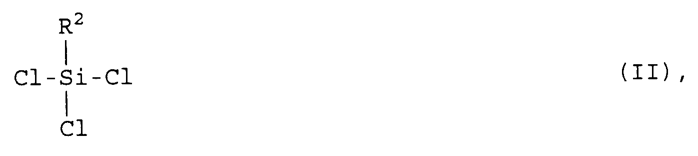 in which R² = Cl, C₁ to C₄ alkyl, vinyl or phenyl, is reacted with ammonia in an inert solvent to form an ammonolysis product and
b) the ammonolysis product is polymerised in the presence of a basic catalyst of the formula (III)
R³R⁴R⁵R⁶N⁺ A⁻ (III),
in which R³, R⁴, R⁵ and R⁶ mutually independently are organic residues having 1 to 24 carbon atoms and A⁻ denotes a deprotonating alkoxy or hydroxy residue, in an inert solvent to form an organic silazane polymer and
c) the catalyst is inactivated at a temperature above its decomposition temperature and
d) the silazane polymer is sintered to form a ceramic material.

10. Process according to claim 9, characterised in that the silazane polymer is melted, shaped and sintered to form a ceramic material.

11. Process according to claim 9, characterised in that the silazane polymer is applied onto a surface to coat a substrate and is sintered to form a ceramic coating.

12. Process according to claim 9, characterised in that the silazane polymer is mixed with ceramic or metal powder or ceramic fibres, the mixture is moulded under the action of heat and/or pressure and is sintered to form a ceramic material.

13. Process according to one or more of claims 9 to 12, characterised in that, once shaped, the silazane polymer is rendered infusible by annealing, oxidation, hydrolysis or irradiation and is sintered to form a ceramic material.

14. Process according to one or more of claims 9 to 13, characterised in that sintering is performed at temperatures of 800°C to 2,000°C.

15. Process according to claim 14, characterised in that sintering is performed in a vacuum or an inert gas atmosphere.

16. Process according to claim 14, characterised in that sintering is at least in part performed in an H₂ or NH₃ atmosphere, whereby a virtually carbon-free ceramic is obtained.

## Revendications

1. Procédé de préparation de polymères organiques fusibles de silazanes caractérisé en ce que
a) on fait réagir un ou plusieurs organochlorosilanes de formule I 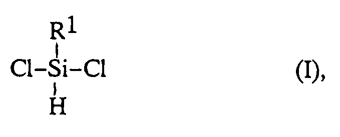 dans laquelle R¹ = Cl, H, alkyle en C₁-C₄ ou phényle, seuls ou avec un ou plusieurs organochlorosilanes de formule II 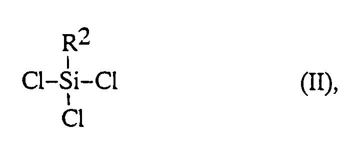 dans laquelle R² = Cl, alkyle en C₁-C₄, vinyle ou phényle, avec l'ammoniac dans un solvant inerte, avec formation d'un produit d'ammoniolyse, et
b) on polymérise ce produit d'ammoniolyse en présence d'un catalyseur basique de formule III
R³R⁴R⁵R⁶N⁺ A⁻ (III)
dans laquelle R³, R⁴, R⁵ et R⁶ représentent chacun, indépendamment les uns des autres, un radical organique en C₁-C₂₄ et A⁻ représente un groupe alcoxy ou hydroxy assurant la déprotonation , dans un solvant inerte, avec formation d'un polymère organique de silazane, et
c) on désactive le catalyseur à une température supérieure à sa température de décomposition.

2. Procédé selon la revendication 1, caractérisé en ce que l'on fait réagir le méthyldichlorosilane avec l'ammoniac.

3. Procédé selon la revendication 1, caractérisé en ce que l'on fait réagir un mélange de 0 à 50 mol % de méthyltrichlorosilane et 50 à 100 mol % de méthyldichlorosilane avec l'ammoniac.

4. Procédé selon une ou plusieurs des revendications 1 à 3, caractérisé en ce que le catalyseur est un hydroxyde de tétraalkylammonium ou un alcoolate de tétraalkylammonium.

5. Procédé selon la revendication 4, caractérisé en ce que le catalyseur est l'hydroxyde de tétraméthylammonium, le méthylate de tétraméthylammonium, l'hydroxyde de tétraéthylammonium, le méthylate de tétraéthylammonium, l'hydroxyde de tétrabutylammonium, le méthylate de tétrabutylammonium, l'hydroxyde de benzyltriméthylammonium, le méthylate de benzyltriméthyl-ammonium, un hydroxyde de (alkyle en C₄-C₂₄)triméthylammonium ou un méthylate de (alkyle en C₄-C₂₄)triméthylammonium.

6. Procédé selon une ou plusieurs des revendications 4 et 5, caractérisé en ce que l'on fait d'abord réagir le produit d'ammoniolyse dans un solvant inerte, à une concentration de 25 à 150 g/l, avec un catalyseur basique de formule III puis on désactive le catalyseur par chauffage à une température supérieure à sa température de décomposition.

7. Polymère organique de silazane obtenu
a) en faisant réagir un ou plusieurs organochlorosilanes de formule I 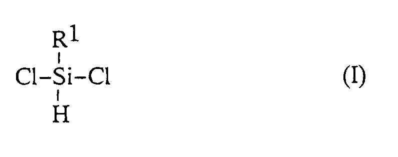 dans laquelle R¹ = Cl, H, alkyle en C₁-C₄ ou phényle, seuls ou avec un ou plusieurs organochlorosilanes de formule II 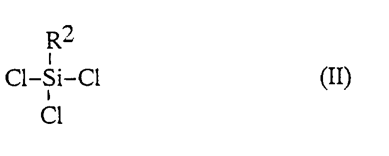 dans laquelle R² = Cl, alkyle en C₁-C₄, vinyle ou phényle, avec l'ammoniac dans un solvant inerte, ce qui donne un produit d'ammoniolyse, et
b) en polymérisant le produit d'ammoniolyse en présence d'un catalyseur basique de formule III
R³R⁴R⁵R⁶N⁺ A⁻ (III),
dans laquelle R³, R⁴, R⁵ et R⁶ représentent chacun indépendamment les uns des autres un radical organique en C₁-C₂₄ et A⁻ représente un groupe alcoxy ou hydroxy assurant la déprotonation, dans un solvant inerte, avec formation d'un polymère organique de silazane, et
c) en désactivant le catalyseur à une température supérieure à sa température de décomposition.

8. Polymère organique de silazane selon la revendication 7, caractérisé en ce qu'il a un point de fusion de 50 à 200°C et est exempt de métaux alcalins et alcalino-terreux.

9. Procédé de préparation de matières céramiques caractérisé en ce que
a) on fait réagir un ou plusieurs organochlorosilanes de formule I 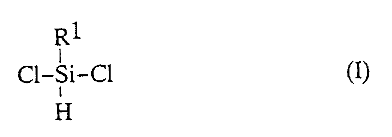 dans laquelle R¹ = Cl, H, alkyle en C₁-C₄ ou phényle, seuls ou avec un ou plusieurs organochlorosilanes de formule II 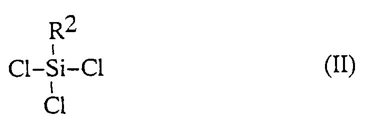 dans laquelle R² = Cl, alkyle en C₁-C₄, vinyle ou phényle, avec l'ammoniac dans un solvant inerte, ce qui donne un produit d'ammoniolyse, et
b) on polymérise le produit d'ammoniolyse en présence d'un catalyseur basique de formule III
R³R⁴R⁵R⁶N⁺ A⁻ (III),
dans laquelle R³, R⁴, R⁵ et R⁶ représentent chacun indépendamment les uns des autres un radical organique en C₁-C₂₄ et A⁻ représente un groupe alcoxy ou hydroxy assurant la déprotonation, dans un solvant inerte, avec formation d'un polymère organique de silazane, et
c) on désactive le catalyseur à une température supérieure à sa température de décomposition et
d) on fritte le polymère de silazane avec formation d'une matière céramique.

10. Procédé selon la revendication 9, caractérisé en ce que le polymère de silazane est fondu, façonné et fritté avec une formation d'une matière céramique.

11. Procédé selon la revendication 9, caractérisé en ce que, pour le revêtement d'un support, le polymère de silazane est appliqué sur une surface et fritté avec formation d'un revêtement céramique.

12. Procédé selon la revendication 9, caractérisé en ce que le polymère de silazane est mélangé avec une poudre céramique métallique ou avec des fibres céramiques, le mélange est façonné sous l'action de la chaleur et/ou de la pression et fritté avec formation d'une matière céramique.

13. Procédé selon une ou plusieurs des revendications 9 à 12, caractérisé en ce que, après façonnage, le polymère de silazane est rendu infusible par cuisson, oxydation, hydrolyse ou exposition à des rayonnements puis fritté avec formation d'une matière céramique.

14. Procédé selon une ou plusieurs des revendications 9 à 13, caractérisé en ce que le frittage est réalisé à des températures de 800 à 2 000°C.

15. Procédé selon la revendication 14, caractérisé en ce que le frittage est réalisé sous vide ou en atmosphère de gaz inerte.

16. Procédé selon la revendication 14, caractérisé en ce que le frittage est réalisé, en partie au moins, en atmosphère d'hydrogène ou d'ammoniac, avec formation d'une matière céramique presque exempte de carbone.
